# EUROPÄISCHE PATENTSCHRIFT

(11) **EP 0 641 694 B1**
(45) Veröffentlichungstag und Bekanntmachung des Hinweises auf die Patenterteilung: **27.11.1996**
(21) Anmeldenummer: 94111082.7
(22) Anmeldetag: 16.07.1994
(51) Int. Cl.: B60S 1/08

(54) **Optoelektronische Sensoreinrichtung**
Optoelectronic sensor device
Dispositif détecteur optoélectronique

(30) Priorität: 02.09.1993 DE 4329608
(43) Veröffentlichungstag der Anmeldung: 08.03.1995
(73) Patentinhaber: Leopold Kostal GmbH & Co. KG, 58507 Lüdenscheid (DE)
(72) Erfinder: Veltum, Christian, D-58644 Iserlohn (DE); Böbel, Ralf, D-44269 Dortmund (DE)

(56) Entgegenhaltungen:
- EP-A- 0 412 653
- WO-A-92/18848
- DE-C- 4 006 174

## Beschreibung

Die vorliegende Erfindung geht von einer gemäß dem Oberbegriff des Hauptanspruches konzipierten, zur Erfassung des Benetzungsgrades einer transparenten Scheibe mit z.B. tropfenförmig vorliegendem natürlichen Niederschlag vorgesehenen Sensoreinrichtung aus, die auf optoelektronischer Basis arbeitet.

Derartige Einrichtungen sind insbesondere dafür bestimmt, um die auf der Front- oder der Heckscheibe eines Kraftfahrzeuges sich pro Zeiteinheit niederschlagende Feuchtigkeit mengenmäßig in repräsentativer Form zu erfassen und in Abhängigkeit davon ein der Scheibe zugeordnetes Scheibenwischsystem automatisch zu beeinflussen.

Durch die DE 33 14 770 C1 ist eine Einrichtung zum Steuern einer motorgetriebenen Scheibenwischeinrichtung bekanntgeworden, bei der über einen an der inneren Oberfläche einer transparenten Scheibe angebrachten Strahlenleitkörper von einem zugeordneten Strahlensender emittierte Strahlen in die transparente Scheibe eingekoppelt und nach mindestens einer Reflektion an der äußeren Oberfläche der Scheibe über den Strahlenleitkörper wieder ausgekoppelt und zu einem zugeordneten Strahlenempfänger geleitet werden. Ein solcher Strahlenleitkörper muß aus Schutzgründen bzw. zwecks Gewährleistung einer einwandfreien Messung zusammen mit dem Strahlensender und dem Strahlenempfänger in einem Gehäuse angeordnet sein.

Außerdem sind durch die DE 40 06 420 A1 und die DE 40 19 066 A1 an Scheiben zu befestigende optoelektronische Sensoreinrichtungen zum Erfassen von Fremdkörpern oder Belägen bekanntgeworden. Zum Schutze vor Verschmutzungen sind solche Sensoreinrichtungen üblicherweise von einem Gehäuse umgeben.

Ein derartiger, zusammen mit zumindest einem Strahlensender und zumindest einem Strahlenempfänger von einem Gehäuse umgebener Strahlenleitkörper ist z.B. durch die DE 40 06 174 C1 bekanntgeworden. Das Gehäuse ist dabei über Clipsmittel am Strahlenleitkörper gehalten, wobei am Strahlenleitkörper Rastausnehmungen vorhanden sind, in die Rastnocken von am Sockelteil des Gehäuses angeordneten Rastarmen eingreifen. Bei einer solchen Ausführungsform besteht das Problem, daß durch die recht beachtliche Masse der mit dem Strahlenleitkörper über die Clipsmittel verbundenen Bauteile bei den in einem Kraftfahrzeug auftretenden, z.B. aus Beschleunigungsvorgängen resultierenden, relativ großen Kräften es möglich ist, daß die Verbindung sich löst und die Bauteile abfallen. In einem sich bewegenden Kraftfahrzeug kann ein derartiger Vorfall zu einer gefährlichen Situation bzw. zu einem Unfall führen.

Der vorliegenden Erfindung liegt deshalb die Aufgabe zugrunde, eine Sensoreinrichtung der eingangs erwähnten Art so weiterzubilden, daß die dem Strahlenleitkörper zugeordneten Bauteile mit Sicherheit an demselben gehalten werden.

Erfindungsgemäß wird die Aufgabe durch die im kennzeichnenden Teil des Hauptanspruches angegebenen Merkmale gelöst.

Vorteilhaft bei einer derartigen Ausgestaltung ist, daß eine sehr kompakte, nur relativ wenig Platz und einen minimalen Aufwand beanspruchende Verriegelung der Rastmittel realisiert ist.

Im Zusammenhang mit einer so ausgebildeten Sensoreinrichtung ist es günstig, wenn das den Strahlenleitkörper umgebende Gehäuse zweiteilig ausgeführt ist und die die sichere Befestigung der Bauteile am Strahlenleitkörper bewirkenden Mittel am Sockelteil des Gehäuses vorhanden sind.

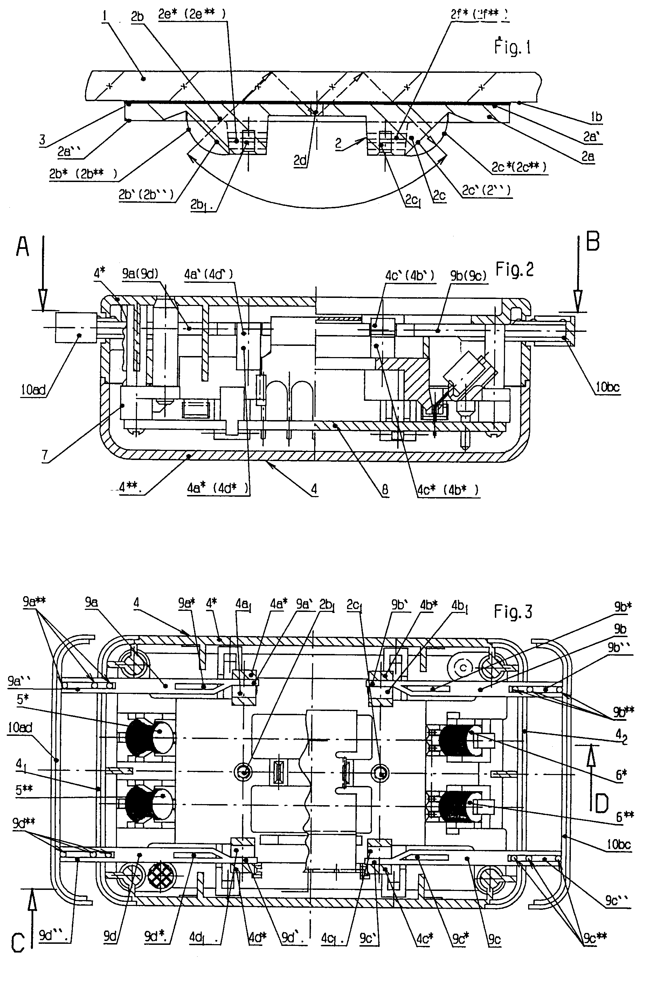

Weitere vorteilhafte Ausgestaltungen des erfindungsgemäßen Gegenstandes sind in den Unteransprüchen angegeben und werden anhand eines in der Zeichnung dargestellten Ausführungsbeispieles einer entsprechend aufgebauten Sensoreinrichtung näher erläutert. Dabei zeigen
- Fig. 1: einen Längsschnitt durch den einer Sensoreinrichtung nach Fig. 2 und 3 zugehörigen, an einer transparenten Scheibe angeklebten Strahlenleitkörper
- Fig. 2: die Sensoreinrichtung ohne Strahlenleitkörper im Schnitt gemäß Linie C-D der Fig. 3
- Fig. 3: die Sensoreinrichtung ohne Strahlenleitkörper im Schnitt gemäß Linie A-B der Fig. 2.

Wie aus der Zeichnung hervorgeht, weist eine zur Erfassung des Benetzungsgrades einer vorzugsweise aus Glas bestehenden transparenten Scheibe 1 mit beispielsweise tropfenförmig vorliegendem natürlichen Niederschlag vorgesehene optoelektronische Sensoreinrichtung im wesentlichen einen Strahlenleitkörper 2 auf, der mittels einer z.B. für IR-Strahlen durchlässigen Klebeschicht 3 auf der nicht den Niederschlag ausgesetzten inneren Oberfläche 1b der Scheibe 1 befestigt wird.

Bei der Scheibe 1 handelt es sich insbesondere um die Windschutzscheibe eines Kraftfahrzeuges, an der die in einem im wesentlichen zweiteiligen Gehäuse 4 angeordnete Sensoreinrichtung an exponierter, d.h. die Sicht nicht beeinträchtigender, jedoch für die Erfassung des Niederschlages prädestinierter Stelle vorhanden ist. Der Strahlenleitkörper 2 besteht dabei aus einem flach ausgebildeten Basisbereich 2a und einem den Strahlensendern 5*,5** zugeordneten Strahleneintrittsbereich 2b sowie einem den Strahlenempfängern 6*,6** zugeordneten Strahlenaustrittsbereich 2c, die auf der von der Scheibe 1 abgewandten Oberfläche 2a'' des Basisbereiches 2a vorhanden sind. Der Strahlenantrittsbereich 2b ist ebenso wie der Strahlenaustrittsbereich 2c mit zwei Strahlenfenstern 2b',2b''; 2c',2c'' versehen, die den Strahlensendern bzw. Strahlenempfängern über jeweils eine zugehörige Strahlenlinse 2b*,2b**; 2c*,2c** zugeordnet sind. Die Strahlenfenster sind dabei jeweils unter einen Winkel von etwa 45° gegenüber der Oberfläche 2a'' des Basisbereiches 2a ausgerichtet und am Strahleneintrittsbereich 2b bzw. Strahlenaustrittsbereich 2c so angeordnet, daß ihre Mittellinien um einen Winkel von etwa 90° gegeneinander versetzt sind.

Um sicherzustellen, daß eine Beeinflussung des Meßergebnisses durch nicht direkt der Meßstrecke zugehörige Strahlen weitgehend verhindert wird, ist der Strahlenleitkörper 2 vorzugsweise auf seiner von der Scheibe 1 abgewandten Oberfläche 2a'' des Basisbereiches 2a und den zugeordneten Oberflächen des Strahleneintrittsbereiches 2b sowie des Strahlenaustrittsbereiches 2c nahezu vollständig, d.h. bis auf die für den bestimmungsgemäßen Strahlendurchtritt vorgesehenen Oberflächenanteile mit einer der Einfachheit halber nicht dargestellten Schutzschicht versehen. Im einzelnen bedeutet dies, daß die aus einem reflektierenden und/oder absorbierenden Material bestehende Schutzschicht die von der Scheibe 1 abgewandten Oberflächen des Strahlenleitkörpers 2 bis auf die den Strahlenlinsen 2b*,2b**; 2c*,2c** zugehörigen Oberflächenanteile bedeckt.

Zwecks Vergrößerung der auf der Scheibe abzutastenden Meßfläche kann - wie an sich bekannt - eine Mehrfachreflektion der Strahlen im Bereich der Scheibe 1 realisiert werden. Hierfür ist die an der von der Scheibe 1 abgewandten Oberfläche 2a'' des Basisbereiches 2a in dem zwischen dem Strahleneintrittsbereich 2b und dem Strahlenaustrittsbereich 2c liegenden Abschnitt vorhandene Schutzschicht als Reflektionsschicht ausgebildet. Damit diese Reflektionsschicht auf der relevanten Oberfläche des Strahlenleitkörpers 2 gut haftet, wird diese aus einem Material hergestellt, dessen Ausdehnungskoeffizient demjenigen des Materials des Strahlenleitkörpers 2 sehr nahe kommt.

Um zu verhindern, daß in den Strahlenleitkörper 2 neben Strahlen einer bestimmten Wellenlänge - wie z.B. IR-Strahlen - auch Strahlen mit anderer Wellenlänge eintreten können, ist der Strahlenleitkörper 2 zumindest hinsichtlich seiner Oberfläche in geeigneter Art und Weise behandelt.

Um die insbesondere von dem durch die optischen Gesetzmäßigkeiten bestimmten Strahlenverlauf abhängigen Abmessungen und zwar die Länge und die Höhe des Strahlenleitkörpers 2 zu minimieren, sind die Strahlenfenster 2b',2b'' und die zugehörigen Strahlenlinsen 2b*,2b** des Strahleneintrittsbereiches 2b sowie die Strahlenfenster 2c',2c'' und die zugehörigen Strahlenlinsen 2c*,2c** des Strahlenaustrittsbereiches 2c partiell in jeweils einer in der von der Scheibe 1 abgewandten Oberfläche 2a'' des Basisbereiches vorhandenen, vorzugsweise einen keilförmigen Verlauf aufweisenden Vertiefung angeordnet. Dadurch wird auch der Meßwert minimiert, was durch die damit verbundene minimierte Dämpfung von beachtlicher Bedeutung für die erforderliche Sendeleistung und das Meßergebnis ist.

Das jeweilige Strahlenfenster 2b',2b'' und 2c',2c'' bzw. die jeweils damit verbundenen Strahlenlinse 2b*,2b** und 2c*,2c** ist der jeweils zugehörigen Vertiefung dabei derart zugeordnet, daß eine Stelle des Umfangs derselben den jeweils tiefsten Abschnitt der jeweils zugehörigen Vertiefung tangiert. Der tiefster Abschnitt der Vertiefung befindet sich dabei in der mittleren Materialzone des Basisbereiches 2a und zwar um die mechanische Stabilität desselben nicht zu beeinträchtigen.

Um den Strahlenleitkörper 2 in einwandfreier Art und Weise an der Scheibe 1 zu befestigen, wird für denselben vorzugsweise ein Material verwendet, das demjenigen der Scheibe 1 entspricht oder das zumindest ein Ausdehnungsverhalten aufweist, welches mit demjenigen der Scheibe 1 quasi übereinstimmt. Für die Befestigung wird eine optisch transparente Klebeschicht 3 verwendet, die beispielsweise als flüssiger Kleber über einen im Zentrum des Basisbereiches 2a vorhandenen, vorzugsweise rotationssymetrisch ausgeführten Durchbruch 2d mittels Injektionsvorrichtung zugeführt wird. Der flach ausgebildete, zumindest quasi parallel zum Scheibenverlauf sich erstreckende Basisbereich 2a des Strahlenleitkörpers 2 weist vorteilhafterweise eine elipsenartige Kontur auf. Dadurch wird erreicht, daß der anfänglich gleichmäßig zwischen der inneren Oberfläche 1b der Scheibe 1 und der derselben zugewandten Oberfläche 2a' des Basisbereiches 2a sich ausbreitende Kleber beim Erreichen des Randes des Basisbereiches 2a (was zuerst in der Nähe der Enden der Elipsenhauptachse erfolgt) aufgrund der dabei zur Ausübung gelangenden Haltekräfte (Oberflächenspannung des Klebers etc.) dort abgebremst wird und sich dadurch erst weiter in Richtung der Elipsenhauptachse ausbreitet. Bei einer genau dosierten Klebermenge wird erreicht, daß praktisch die einander zugeordneten Oberflächenbereiche der Scheibe 1 und des Strahlenleitkörpers 2 vollständig benetzt werden, ohne daß wesentliche Anteile des Klebers darüber hinaus treten und ohne daß die Dicke der Klebeschicht sich in einem das Meßergebnis beeinflussenden Umfang verändert.

Zwecks einwandfreier, d.h. exakter Zuordnung der Strahlensender 5*,5** sowie der Strahlenempfänger 6*,6** zum zugehörigen Strahlenfenster bzw. zur zugeordneten Strahlenlinse - was für eine einwandfreie Messung von großer Bedeutung ist - ist der Strahlenleitkörper 2 mit Haltemitteln versehen, die mit an einem Bauelementeträger 7 vorhandenen, der Einfachheit halber nicht näher hervorgehobenen Befestigungsmittel kooperieren. An dem Bauelementeträger sind dabei neben einer Leiterplatte 8 mit darauf einschließlich einer Heizvorrichtung angeordneten elektrischen Bauelementen auch die Strahlensender 5*,5** und die Strahlenempfänger 6*,6** in entsprechender Ausrichtung gehalten. Die Haltemittel setzen sich einerseits aus in den Kopfflächen des Strahleneintrittsbereichs 2b und des Strahlenaustrittsbereichs 2c vorhandenen, vorzugsweise rotationssymetrisch ausgebildeten, für eine exakte Festlegung des Bauelementeträger 7 in X- und Y-Richtung vorgesehenen Ausnehmungen 2b1,2c1 sowie aus in zwei sich gegenüberliegenden Seitenwänden des Strahleneintrittsbereiches 2b und des Strahlenaustrittsbereiches 2c vorhandenen, der Einfachheit halber nicht dargestellten, zur Fixierung des Bauelementeträgers in Z-Richtung vorgesehenen Einkerbungen zusammen.

Um nunmehr die Bauteile 4 bis 8 an dem der Scheibe 1 angeklebten Srahlenleitkörper 2 zu halten, sind an dem Sockelteil 4* des Gehäuses 4 vier U-förmig gebogene Rastarme 4a* - 4d* angeformt, an deren freien Enden 4a' - 4d' der Einfachheit halber nicht näher veranschaulichte Rastnocken vorhanden sind, die in Rastausnehmungen 2e*,2e** und 2f**,2f** eingreifen. Damit die Rastnocken nicht aus den zugeordneten Rastausnehmungen herausgleiten können, sind den Rastarmen 4a* - 4 d* schieberartige Blockierorgane 9a - 9d zugeordnet, die am Sockelteil 4* geführt gehalten und über Betätigungselemente 10ad,10bc verstellbar sind. Die anderen (freien) Endbereiche 9a' - 9d' der Blockierorgane 9a - 9d greifen dabei jeweils in den zwischen den Schenkeln der U-förmigen Rastarme 4a* - 4d* vorhandenen Zwischenraum 4a₁ - 4d₁ und verhindern dadurch ein Zurückweichen der freien Enden der Rastarme und damit der dort vorgesehenen Rastnocken.

Um insbesondere die auch in diesem Bereich vorhandenen Toleranzen der miteinander in Eingriff stehenden Bauteilabschnitte auszugleichen, ist der den Rastarmen 4a* - 4d* jeweils zugeordnete andere (freie) Endbereich der Blockierorgane 9a - 9d mit einem federnden Abschnitt 9a* - 9d* versehen. Die federnden Abschnitte 9a* - 9d* werden dabei jeweils durch eine in die Blockierorgane 9a - 9d eingebrachte langlochartige Aussparung realisiert. Die den anderen Endbereichen 9a' - 9d' gegenüberliegenden einen Endbereichen 9a'' - 9d'' der paarweise an den beiden Schmalseiten des Sockelteiles 4* vorhandenen, durch dort vorgesehene Durchbrüche 4₁,4₂ nach außen ragenden Blockierorgane sind je Blockierorganpaar mit einem gemeinsamen Betätigungselement 10ad,10bc versehen. An diesen anderen Endbereichen 9a'' - 9d'' sind kuppenförmige Rastelemente 9a** - 9d** zur Definition einer End- und einer Verriegelungsposition vorhanden, die mit am Sockelteil 4* des Gehäuses 4 vorgesehenen Gegen-Rastelementen kooperieren. Die Gegen-Rastelemente werden dabei von auf die Rastelemente abgestimmten Zonen der Durchbrüche 4₁,4₂ gebildet. Die Betätigungselemente und die am Sockelteil vorhandenen Durchbrüche sind schließlich so gestaltet, daß die Betätigungselemente in der Verriegelungsposition bündig mit dem Gehäuse 4 abschließen. Weitere in der Zeichnung dargestellte Einzelheiten sind für das Verständnis der Erfindung ohne Belang, so daß hierauf nicht näher eingegangen wird.

## Patentansprüche

1. Optoelektronische Sensoreinrichtung zur Erfassung von auf der äußeren Oberfläche einer transparenten Scheibe (1) vorhandenem natürlichen Niederschlag, mit einem an der inneren Oberfläche (1b) der Scheibe (1) angeklebten, von einem eine im wesentlichen rechteckförmige Kontur aufweisenden Gehäuse (4) umgebenen Strahlenleitkörper (2), der mindestens eine zumindest ein für die Niederschlagsmenge repräsentatives Meßfeld umfassende Meßstrecke aufweist, der einerseits ein Strahlensender (5*, 5**) und andererseits ein Strahlenempfänger (6*, 6**) zugeordnet ist, die im Gehäuse (4) angeordnet sind, wobei das Gehäuse (4) über Clipsmittel am Strahlenleitkörper (2) gehalten ist und wobei die Clipsmittel aus an sich gegenüberliegenden Seitenbereichen des Gehäuses (4) vorhandenen, mit Rastnocken versehenen Rastarmen (4a* - 4d*) und aus an sich gegenüberliegenden Seitenwänden des Strahlenleitkörpers (2) vorgesehenen, jeweils mit jeweils einem Rastnocken kooperierenden Rastausnehmungen (2e*, 2e**, 2f*, 2f**) bestehen, **dadurch gekennzeichnet,** daß den Rastarmen (4a*- 4d*) jeweils ein schieberartig ausgebildetes, im Gehäuse (4) parallel zur Scheibe (1) geführt gehaltenes, über ein Betätigungselement (10ad,10bc) verstellbares, ein Herausrutschen des zugehörigen Rastnockens aus der damit kooperierenden Rastausnehmung (2e*,2e** und 2f*,2f**) verhinderndes Blockierorgan (9a - 9d) zugeordnet ist.

2. Optoelektronische Sensoreinrichtung nach Anspruch 1, dadurch gekennzeichnet, daß die Rastarme (4a* - 4d*) und die Blockierorgane (9a - 9d) an dem Sockelteil (4*) des aus einem an der inneren Oberfläche (1b) der Scheibe (1) anliegenden Sockelteil (4*) und einem damit verbundenen Deckelteil (4**) bestehenden Gehäuses (4) vorhanden sind.

3. Optoelektronische Sensoreinrichtung nach einem der Ansprüche 1 oder 2, dadurch gekennzeichnet, daß im Bereich der beiden sich gegenüberliegenden Schmalseiten des Gehäuses (4) jeweils zwei sich parallel zu den Seitenwänden des Strahlenleitkörpers (2) erstreckende Blockierorgane (9a - 9d) mit jeweils ihren einem Endbereich (9a'' - 9d'') vorhanden sind, deren jeweils anderer Endbereich (9a' - 9d') den Rastarmen (4a* - 4d*) zugeordnet ist.

4. Optoelektronische Sensoreinrichtung nach Anspruch 3, dadurch gekennzeichnet, daß die einen Endbereiche (9a'' - 9d'') der an der einen Schmalseite und/oder an der anderen Schmalseite des Gehäuses (4) vorhandenen Blockierorgane (9a - 9d) über jeweils ein gemeinsames Betätigungselement (10ad - 10bc) miteinander verbunden sind.

5. Optoelektronische Sensoreinrichtung nach einem der Ansprüche 1 bis 4, dadurch gekennzeichnet, daß die auf den sich gegenüberliegenden Schmalseiten des Gehäuses (4) vorhandenen, mit den aus dem Gehäuse (4) über Durchbrüche (4₁,4₂) nach außen geführten einen Endbereichen (9a'' - 9d'') der Blockierorgane (9a - 9d) verbundenen Betätigungselementen (10ad - 10bc) jeweils in ihrer Blockierposition im Gehäuse (4) bündig versenkt und damit die Durchbrüche (4₁,4₂) verschließend angeordnet sind.

6. Optoelektronische Sensoreinrichtung nach Anspruch 5, dadurch gekennzeichnet, daß an den Betätigungselementen (10ad - 10bc) und/oder den Blockierorganen (9a - 9d) Rastelemente (9a** - 9d**) vorhanden sind, der zur Realisierung einer Ver- und einer Entriegelungsposition der Blockierorgane (9a - 9d) Gegen-Rastelemente zugeordnet sind, die an dem Sockelteil (4*) des Gehäuses (4) vorgesehen sind.

7. Optoelektronische Sensoreinrichtung nach Anspruch 6, dadurch gekennzeichnet, daß die Rastelemente (9a** - 9d**) aus an den einen Endbereichen (9a'' - 9d'') der Blockierorgane (9a - 9d) angeordneten, kuppenförmigen Erhebungen bestehen, die darauf abgestimmten, als Gegen-Rastelemente wirkenden Zonen der in dem Sockelteil (4*) vorhandenen Durchbrüche (4₁,4₂) zugeordnet sind.

8. Optoelektronische Sensoreinrichtung nach Anspruch 1 oder einem der folgenden, dadurch gekennzeichnet, daß die Blockierorgane (9a - 9d) im Bereich ihrer anderen Endbereiche (9a' - 9d') mit den Rastarmen (4a* - 4d*) zugeordneten federnden Abschnitten (9a* - 9d*) versehen sind.

9. Optoelektronische Sensoreinrichtung nach Anspruch 1 oder einem der folgenden, dadurch gekennzeichnet, daß die Blockierorgane (9a - 9d) jeweils mit ihrem anderen Endbereich (9a' - 9d') in den Zwischenraum (4a₁ - 4d₁) eingreifen, der zwischen den Schenkeln der U-förmig ausgebildeten Rastarme (4a* - 4d*) vorhanden ist.

10. Optoelektronische Sensoreinrichtung nach Anspruch 9, dadurch gekennzeichnet, daß die federnden Abschnitte (9a* - 9d*) der Blockierorgane (9a - 9d) in den Zwischenräumen (4a₁ - 4d₁) angeordnet und den Rastarmen (4a* - 4d*) im Bereich der Rastnocken zugeordnet sind.

## Claims

1. Optoelectronic sensor device for registering natural precipitation on the outer surface of a transparent screen (1) by means of a beam conducting unit (2) adhering to the inner surface (1b) of the screen (1) and installed in a housing (4) with essentially rectangular contours whereby the beam conducting unit (2) features at least one measuring path encompassing at least one measuring area which is representative for the amount of precipitation, the said measuring path corresponding on the one hand to a beam transmitter (5*,5**) and on the other hand to a beam receiver (6*,6**) both of which are located in the housing (4) which is secured to the beam conducting unit (2) by means of clip elements comprising catch arms (4a* - 4d*) which feature catch lugs and are located on opposite sides of the housing (4) and of jogs (2e*,2e**,2f*,2f**) positioned on opposite sides of the beam conducting unit (2) each of which cooperates with a respectively corresponding catch lug,
**characterized by the fact that** each of the catch arms (4a* - 4d*) corresponds to a push-in type locking device (9a - 9d) which is held in the housing (4) in a guided fashion parallel to the screen (1), is adjustable by way of an actuating element (10ab,10bc), and prevents the corresponding catch lugs from escaping from the respective jog (2e*,2e** and 2f*,2f**) with which it cooperates.

2. Optoelectronic sensor device in accordance with claim 1, characterized by the fact that the catch arms (4a* - 4d*) and the locking devices (9a - 9d) are formed onto the base element (4*) of the housing (4) comprising a base element (4*) which is attached to the inner surface (1b) of the screen (1) and a corresponding top cover element (4**).

3. Optoelectronic sensor device in accordance with one of the claims in 1 or 2, characterized by the fact that in the area of each of the two opposite narrow sides of the housing (4) there are two locking devices (9a - 9d), one end zone (9a'' - 9d'') of which runs parallel to the sides of the beam conducting unit (2), and the other end zone (9a' - 9d') of which corresponds to the catch arms (4a* - 4d*).

4. Optoelectronic sensor device in accordance with claim 3, characterized by the fact that the one end zone (9a'' - 9d'') of the locking devices (9a - 9d) formed onto the one narrow side of the housing (4) or to the other end respectively are connected to each other by way of a common actuating element (10ad - 10bc).

5. Optoelectronic sensor device in accordance with one of the claims 1 to 4, characterized by the fact that the actuating elements (10ab - 10bc) formed onto the opposite narrow sides of the housing (4) and connected to the end zones (9a'' - 9d'') of the locking devices (9a - 9d) projecting from the housing (4) through apertures (4a₁,4d₂) are each let-in flush in their locked position in the housing (4) and thus act as closures for apertures (4a₁,4d₂).

6. Optoelectronic sensor devices in accordance with claim 5, characterized by the fact that there are catch elements (9a** - 9d**) on the actuating elements (10ab - 10bc) and/or the locking devices (9a - 9d) to which counter-catch elements correspond to realize a locking and an unlocking position of the locking devices (9a - 9d), formed onto the base element (4*) of the housing (4).

7. Optoelectronic sensor device in accordance with claim 6, characterized by the fact that the catch elements (9a** - 9d**) comprise dome-shaped bumps which are positioned in one of the end zones (9a'' - 9d'') of the locking devices (9a - 9d) to correspond to sections of the appropriate apertures (4a₁ ,4d₂) in the base element (4*) and act as mated locking elements.

8. Optoelectronic sensor device in accordance with claim 1 or one of the following, characterized by the fact that the locking devices (9a - 9d) are provided with resilient sections (9a* - 9d*) in the region of their other end zones (9a' - 9d') which correspond to the catch arms (4a* - 4d*).

9. Optoelectronic sensor device in accordance with claim 1 or one of the following, characterized by the fact that the opposing end zone (9a' - 9d') of each of the locking devices (9a - 9d) engages in the gap (4a₁ - 4d₁) between the legs of the U-shaped catch arms (4a* - 4d*).

10. Optoelectronic sensor device in accordance with claim 9, characterized by the fact that the resilient sections (9a* - 9d*) of the locking devices (9a - 9d) are positioned in the gaps (4a₁ - 4d₁ ) and correspond to the catch arms (4a* - 4d*) in the region of the catch lugs.

## Revendications

1. Dispositif sensoriel, optoélectrique destiné à détecter le degré d'humidification de la surface extérieure d'une glace transparente (1) à la suite d'une précipitation naturelle, lequel dispositif comprend un corps conducteur de rayons (2) qui est entouré d'un boitier (4) dont les contours sont essentiellement rectangulaires, et présente, au moins, une section mesurée qui comprend, au moins, un champ de mesure représentatif pour la quantité de précipitation, et à laquelle un émetteur de rayons (5*, 5**) et un récepteur de rayons (6*, 6**), logés dans le boîtier (4), fixé, lui-même, au corps conducteur de rayons (2), sont coordonnés, les moyens de fixation consistant, d'une part, en bras d'arrêt (4a* à 4d*) pourvus de nez et prévus sur des zones latérales du boîtier (4) disposées face à face et, d'autre part, de cavités d'enclement (2c*, 2c**, 2f*, 2f**) qui équipent des parois latérales du corps conducteur de rayons (2) opposées et coopèrent, chacune, avec un nez d'arrêt,
**caractérisé en ce** qu'un organe de blocage (9a à 9d) en forme de coulisseau, logé dans le boîtier (4) et guidé parallèlement à la glace transparente (1) est coordonné à chacun des bras d'arrêt (4a* à 4d*) et, réglable à l'aide d'un élément d'actionnement (10ad, 10bc), empêche le nez d'arrêt de sortir de la cavité d'enclenchement (2e*, 2e** et 2f*, 2f**) correspondante.

2. Dispositif sensoriel selon la revendication 1, **caractérisé en ce que** les bras d'arrêt (4a* à 4d*) et les organe de blocage (9a à 9d) sont prévus sur le socle (4*) du boîtier (4) qui est composé de ce socle (4*) portant contre la surface intérieure (1b) de la glace transparente (1) et d'un couvercle (4**) y relié.

3. Dispositif sensoriel selon la revendication 1 ou 2 **caractérisé en ce que** les extrémités (9a'' à 9d'') de deux organes de blocage (9a à 9d) parallèles aux parois latérales du corps conducteur de rayons (2) se trouvent dans la zone des deux côtés étroits du boitier (4) opposés l'un à l'autre, tandis que les autres extrémités (9a' à 9d') sont subordonnées aux bras d'arrêt (4a* à 4d*).

4. Dispositif sensoriel selon la revendication 3, **caractérisé en ce que** les extrémies (9a'' à 9d'') des organe de blocage (9a à 9d) prévus sur l'un et/ou l'autre côté étroit du boîtier (4) sont reliés ensemble par l'intermédiaire d'un élément d'actionnement (10ad, 10bc) commun.

5. Dispositif sensoriel selon l'une des revendications 1 à 4, **caractérisé en ce** que les éléments d'actionnement (10ad, 10bc), situés sur les côtés étroits du boitier (4) opposés l'un à l'autre et reliés aux extrémités (9a'' à 9d'') des organe de blocage (9a à 9d) sortant du boîtier (4) par les percées (4₁, 4₂), sont disposés, chacun de sorte qu'ils se trouvent à surface plane avec le boîtier (4) quand ils sont descendus en position de blocage et ferment ainsi les percées (4₁, 4₂).

6. Dispositif sensoriel selon la revendication 5, **caractérisé en ce que** des éléments d'arrêt (9a** à 9d**) sont prévus sur les éléments d'actionnement (10ad, 10bc) et/ou les organes de blocage (9a à 9d) et coopèrent avec des contre-organes d'enclenchement prévus sur le socle (4*) du boîtier (4) aux fins de blocage et de déblocage.

7. Dispositif sensoriel selon la revendication 6, **caractérisé en ce que** les 9a les éléments d'arrêt (9a** à 9d**) consistent en saillies en forme de calotte, disposées sur les extrémités (9a'' à 9d'') des organe de blocage (9a à 9d) et coopérant avec des percées (41, 42) pratiquées dans le socle (4*) et agissant en tant que contre-éléments.

8. Dispositif sensoriel selon la revendication 1 ou l'une des revendications suivantes **caractérisé en ce que** les organes de blocage (9a à 9d) sont équipés, dans leurs autres zones extrêmes (9a' à 9d'), de secteurs élastiques (9a* à 9d*) coordonnés aux bras d'arrêt (4a* à 4^{d}*).

9. Dispositif sensoriel selon la revendication 1 ou l'une des revendications suivantes, **caractérisé en ce que** les organes de blocage (9a à 9d) s'engagent, par leurs autres zones extrêmes (9a' à 9d') dans les intervalles situés entre les branches des bras d'arrêt (4a* à 4d*) en forme de U.

10. Dispositif sensoriel selon la revendication 9, **caractérisé en ce que** les secteurs élastiques (9a* à 9d*) des organe de blocage (9a à 9d) sont disposés dans les intervalles (4a₁ à 4d₁) et coordonnés aux bras d'arrêt (4a* à 4d*) dans la zone des nez d'arrêt.
